Europäisches Patentamt

European Patent Office

Office européen des brevets

(11) Numéro de publication: **0 192 581**
A1

# (12) DEMANDE DE BREVET EUROPEEN

(21) Numéro de dépôt: 86420008.4

(22) Date de dépôt: 08.01.86

(51) Int. Cl.⁴: **A 47 J 41/02**

(30) Priorité: 09.01.85 FR 8500410

(43) Date de publication de la demande:
27.08.86 Bulletin 86/35

(84) Etats contractants désignés:
BE CH DE FR GB IT LI SE

(71) Demandeur: APPLICATION DES GAZ
173, rue de Bercy
F-75012 Paris(FR)

(72) Inventeur: Peillon, Jean-Pierre
10, Avenue Maréchal Joffre
F-69630 Chaponost(FR)

(72) Inventeur: Demilliere, Daniel
32, Chemin du Belvédère
F-69340 Francheville(FR)

(74) Mandataire: Karmin, Roger et al,
Cabinet MONNIER 150, cours Lafayette
F-69003 Lyon(FR)

(54) Récipient thermo-isolant.

(57) La structure d'amortissement (2) de son ampoule (1) comprend des éléments d'amortissement (3) distribués de manière discontinue sur la face extérieure latérale de la gaine (4). Ces éléments sont avantageusement solidaires d'une plaque d'amortissement (2) disposée entre la gaine (4) et l'ampoule (1).

Fig. 2

La présente invention se rapporte à des récipients thermo-isolants, permettant de conserver chauds ou froids différents contenus, notamment alimentaires, par exemple des boissons, des denrées, etc....

Plus précisément, l'invention a trait à des récipients comprenant de manière générale :

- au moins une ampoule d'isolation thermique, ayant la forme d'un vase, métallique ou en verre, à double paroi, dont le volume interne est sous vide ; dans le cas d'une ampoule en verre, les faces internes de la double paroi sont revêtues d'une couche réfléchissante, par exemple en argent ; de tels vases sont connus dans la pratique sous le nom de vases Dewar ;

- au moins une gaine rigide de protection de l'ampoule, en métal ou en matière plastique à l'intérieur de laquelle ladite ampoule est maintenue, et ouverte à sa partie supérieure en relation avec l'intérieur de l'ampoule par exemple ; la gaine enferme la totalité de l'ampoule et comprend par exemple un corps et un fond vissé sur ce dernier, et l'ampoule est maintenue par serrage entre, d'un côté une cale axiale en appui sur le fond, et de l'autre côté un joint d'étanchéité comprimé entre le col de l'ampoule et un épaulement approprié du corps ;

- un bouchon amovible, par exemple lui-même isolé thermiquement, disposé au niveau de l'ouverture de la gaine, obturant cette dernière ou un goulot distinct et solidaire de l'ouverture ;

- une structure périphérique d'amortissement des chocs latéraux vis-à-vis de l'ampoule, élastiquement compressible, distribuée régulièrement à l'extérieur et autour de la gaine, par exemple sous la forme d'une enveloppe, suspendant ladite gaine radialement en cas de chute sur le côté.

Des récipients thermo-isolants du type ci-dessus sont montrés par exemple par les brevets DE-C-834 507 et FR-A-2 038 424.

La fonction mécanique de la structure d'amortissement consiste à diminuer la décélération maximale reçue par l'ampoule, jusqu'à un niveau compatible avec la résistance de cette dernière, lorsque le récipient reçoit des chocs latéraux ou radiaux, par exemple par simple basculement d'une position verticale à une position horizontale contre une surface plane, ou encore par chute du récipient plein en position couchée selon une certaine hauteur.

Le choix du matériaux élastiquement compressible retenu, son dimensionnement (surface de contact avec le support-plan rigide contre lequel s'exerce le choc latéral ou radial, épaisseur) déterminent l'efficatité de la structure d'amortissement définie précédemment. A cet égard, en matière d'amortissement, les fournisseurs de matériaux élastiquement compressibles, par exemple de mousses plastiques synthétiques, caractérisent leurs matériaux par des abaques donnant la décélaration reçue par la masse amortie, en fonction de la pression statique exercée sur le matériau d'amortissement, laquelle dépend de la surface de contact avec le support-plan contre lequel s'exerce le choc. Et, ces abaques montrent que pour un matériau donné, d'épaisseur donnée, il existe une valeur optimale de cette surface de contact, au-delà et en deçà de laquelle la décélération reçue augmente respectivement avec la diminution et l'augmentation de ladite surface. De plus, pour un même matériau plastique, ces valeurs optimales diminuent avec la densité, et dans une mesure moins nette avec l'épaisseur de ce dernier.

Pour les récipients thermo-isolants du type défini précédemment, le diamètre hors-tout du récipient, incluant l'épaisseur de la structure d'amortissement, doit demeurer compatible avec une bonne prise en main de l'utilisateur moyen, faute de quoi le récipient en question devient un objet encombrant, de manipulation malaisée, nécessitant de recourir à une poignée rapportée pour son usage. Ou alors, il faut diminuer la capacité de l'ampoule d'isolation thermique, pour obtenir une dimension hors-tout compatible avec une bonne prise en main.

A partir de ces considérations théoriques et pratiques, il devient aisé de comprendre les inconvénients majeurs des récipients thermo-isolants selon l'art antérieur.

Pour une hauteur et un poids donnés du récipient, donc une décélération donnée :

1/ si l'on choisit une surface de contact importante, par exemple une enveloppe complète en matériau élastique de la gaine rigide, alors il faut recourir à des matériaux synthétiques alvéolaires (par exemple mousses de polyéthylène) ayant une faible densité,

2/ si, pour la même surface de contact, on choisit de diminuer l'épaisseur pour conserver une dimension hors-tout raisonnable, alors la décélération du récipient quitte la zone optimale montrée par les abaques décélération/pression statique du matériau choisi, et excède celle supportable sans casse de l'ampoule d'isolation.

Dans le premier cas, la structure d'amortissement correspond à un matériau fluant facilement, résistant mal à l'abrasion et au poinçonnage, et se déchirant facilement, ce qui le rend impropre à une manipulation quotidienne.

Dans le second cas, l'écrasement du matériau d'amortissement est trop important, et la décélération reçue par le récipient aboutit à sa rupture.

La présente invention a pour objet une structure d'amortissement, à la fois efficace au plan des décélérations effectivement reçues par l'ampoule d'isolation thermique, et compatible avec une prise en main directe du récipient par l'utilisateur.

Selon l'invention, la structure de suspension comprend des éléments de suspension distribués de manière discontinue sur la surface externe et latérale de la gaine, et déterminant entre eux des zones libres de tout matériau élastiquement compressible.

A partir des considérations théoriques et pratiques ci-dessus on comprend l'avantage déterminant apporté par l'invention :

- la prise en main du récipient thermo-isolant limite l'épaisseur du matériau élastiquement compressible, disponible pour amortir les chocs latéraux reçus par l'ampoule d'isolation ;

- la surface de contact selon l'invention, entre les différents éléments de suspension et le plan rigide recevant le récipient thermo-isolant en cas de chute latérale, est relativement faible ;

- pour un même type de matériau, par exemple une mousse de polyéthylène, avec cette épaisseur limitée, grâce à la surface de contact relativement faible, on peut recourir à des matériaux à densité plus élevée, donc de bonne résistance mécanique convenant à la fois à une production industrielle et à un usage quotidien du récipient.

Le dessin annexé, donné à titre d'exemple, permettra de mieux comprendre l'invention, les caractéristiques qu'elle présente et les avantages qu'elle est susceptible de procurer :

Fig. 1 est une coupe longitudinale d'un récipient thermo-isolant établi conformément à l'invention.

Fig. 2 en est une coupe suivant II-II (fig. 1). On y a indiqué en I-I le plan de coupe de fig. 1.

Fig. 3 est une coupe longitudinale d'un autre récipient thermo-isolant établi conformément à l'invention.

Fig. 4 est une coupe longitudinale d'un récipient thermo-isolant selon l'invention, à double ampoule d'isolation thermique.

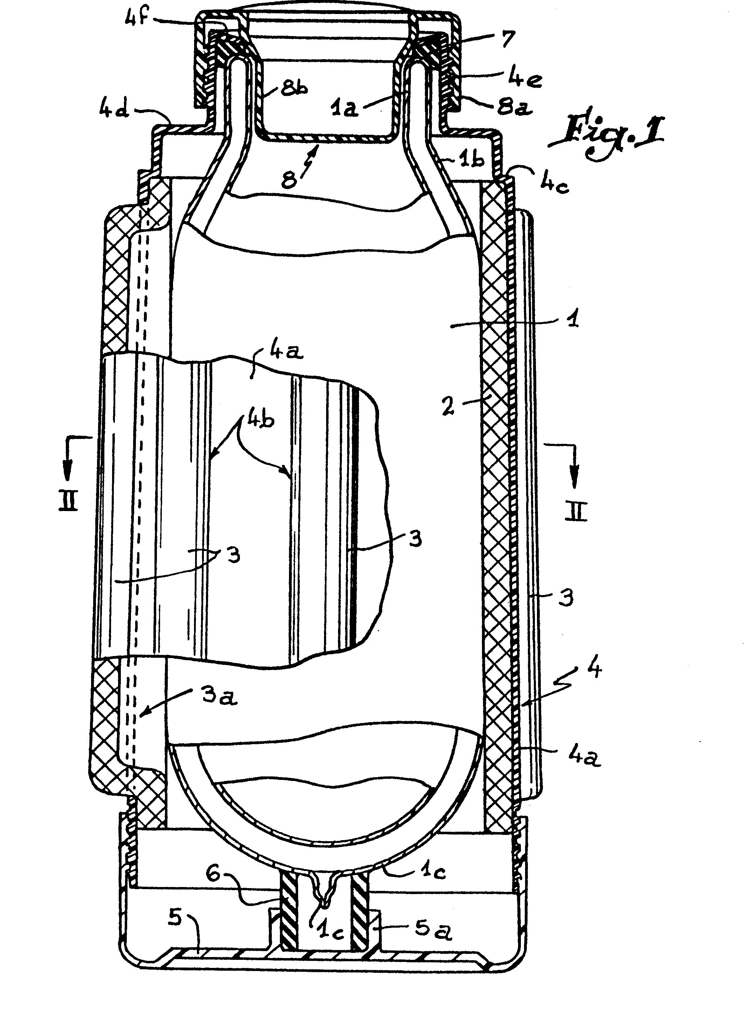

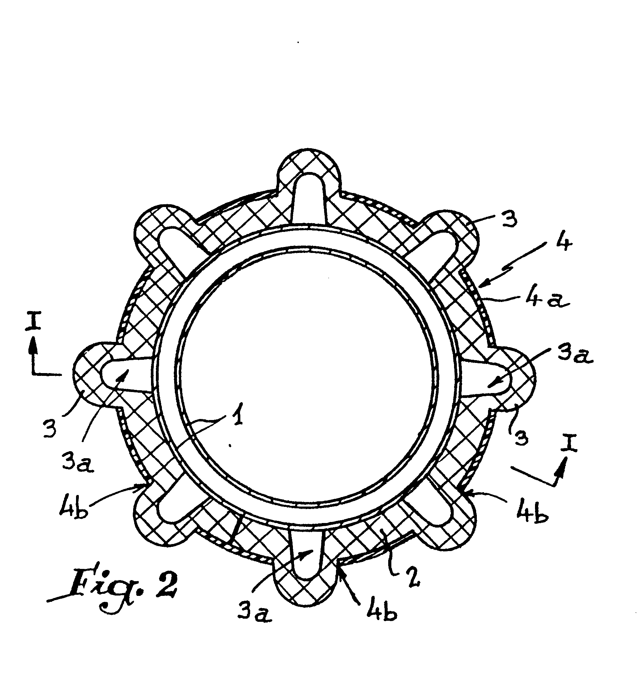

Le récipient isolant illustré en fig. 1 comprend essentiellement une ampoule 1 à double paroi placée sous vide qui est entourée par une structure périphérique d'amortissement située sur une grande partie de sa hauteur et qui est réalisée à partir d'une plaque 2 roulée autour de l'ampoule. La plaque 2 comporte sur sa paroi extérieure des saillies alternées longitudinales ou moulures arrondies 3 de telle sorte qu'une fois enroulée autour de l'ampoule, la structure en question se présente sous la forme d'un cylindre présentant des émergences. On observe en fig. 2 que les moulures arrondies comportent des dépressions intérieures 3a de manière que l'ensemble de la structure présente une épaisseur en gros constante pour faciliter le moulage. En effet, cette structure est réalisée en une mousse alvéolaire de matière plastique telle que du polyéthylène expansé. On observe en fig. 1 que le haut de la structure 2 s'arrête un peu en dessous du goulot 1a de l'ampoule, c'est-à-dire au niveau du milieu de son col ou épaulement 1b. De même manière, la base de la structure 1 se termine un peu au-dessus du fond 1c de l'ampoule 1.

Une fois la structure 2 enroulée autour de l'ampoule 1, l'ensemble est engagé dans une gaine rigide 4 réalisée par exemple en une matière plastique appropriée et qui présente une forme générale tubulaire. Comme illustré en fig. 2, le corps 4a de la gaine 4 présente des découpes longitudinales 4b dont la largeur est idendique à celle des moulures 3, de telle sorte que ces dernières s'engagent dans lesdites découpes et dépassent hors de celles-ci. L'ensemble des moulures constitue un excellent moyen d'amortissement des chocs que pourrait recevoir le récipient isolant.

Le bas du corps 4a de la gaine 4 est fermé par un fond 5 vissé par rapport à un filetage extérieur porté par l'extrémité correspondante dudit corps. On observe qu'à la manière usuelle un manchon 6 de matière élastique entoure le centre du fond 1c de l'ampoule pour qu'elle soit prise en sandwich entre ce fond et un bossage creux 5a ménagé à l'intérieur du fond 5.

La partie haute du corps 4a de la gaine 4 comprend un premier épaulement 4c contre lequel vient buter la partie haute de la structure 2, puis un second épaulement 4d à partir duquel part une cheminée 4e filetée à l'extérieur et qui se termine par une paroi annulaire horizontale 4f. Entre cette paroi 4f et l'extrémité libre du goulot 1a, on place un joint d'étanchéité 7. Le vissage du fond 5 de la gaine 4 provoque la retenue axiale de l'ampoule entre le joint 7 et le manchon élastique 6. Bien entendu un bouchon 8 est prévu pour fermer le goulot 1a de l'ampoule. Ce bouchon comprend une jupe extérieure 8a qui vient se visser par rapport au filetage de la cheminée 4e de la gaine et un corps 8b pénétrant de manière étanche dans l'ouverture du goulot 1a.

Il va de soi que les moulures 3 pourraient être remplacées par des saillies de toute autre forme, par exemple par des plots semi-sphériques. On disposerait alors de rangées longitudinales de plots placés côte à côte pour remplacer les moulures 3. Le pas des plots serait déterminé en fonction des besoins d'amortissement des chocs et de la possibilité de recevoir entre eux les doigts de la main de l'utilisateur.

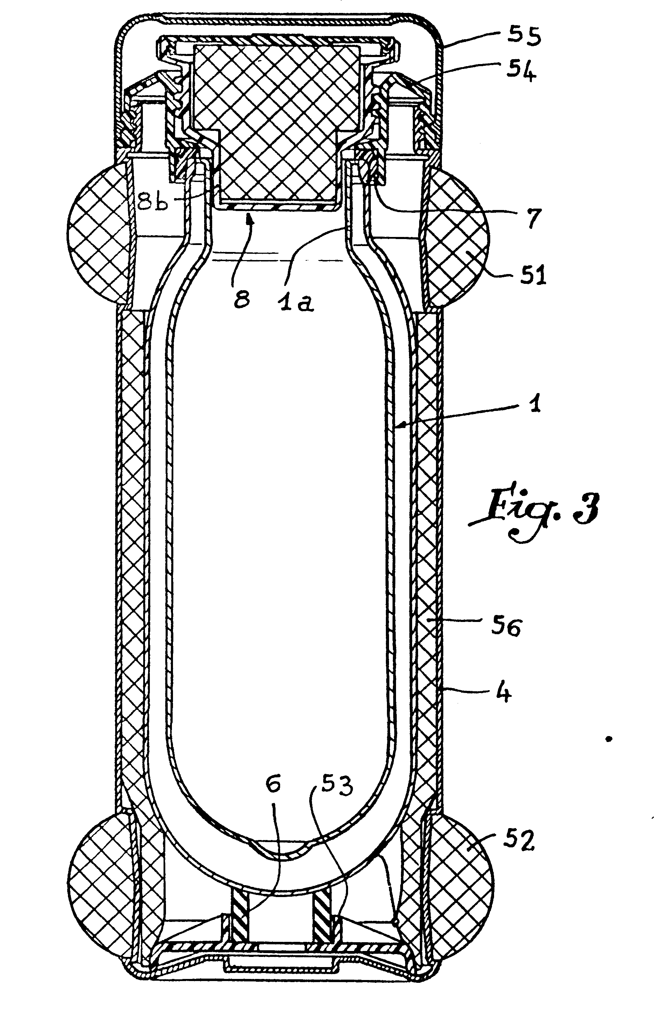

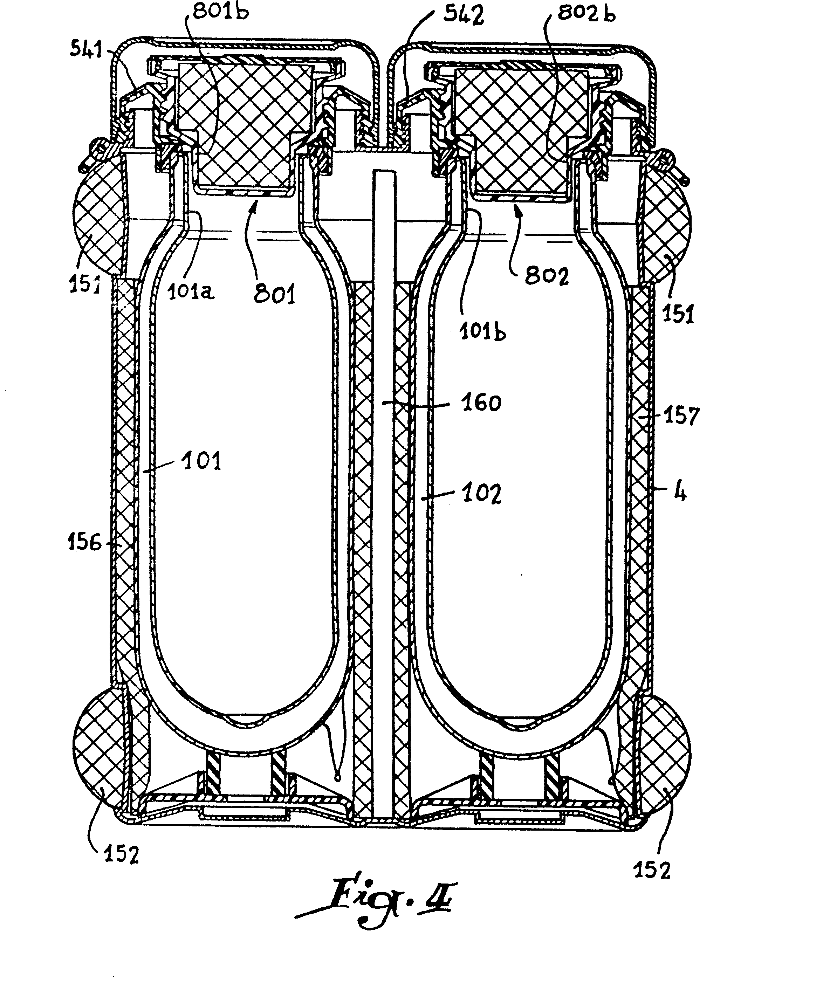

Selon les figures 3 et 4, les références numériques identiques à celles des figures 1 à 2 désignent des éléments ou composants ayant les mêmes fonctions.

Conformément aux figures 3 et 4, les éléments d'amortissement sont orientés normalement ou perpendiculèrement par rapport à l'axe du récipient. Et le récipient conforme à la figure 3 comprend :

     - l'ampoule d'isolation thermique (1) ;

     - la gaine rigide (4) de forme cylindrique, complétée par une pièce de renfort (53) ;

     - une collerette (54) vissée sur la gaine rigide (4), appuyant le joint (7) contre le col de l'ampoule (1) ;

- le bouchon (8) vissé à l'intérieur de la collerette (54) ;

- un gobelet (55) se vissant à l'extérieur de la collerette (54) ;

- une plaque (56) de matériau d'amortissement, enroulée autour de l'ampoule (1), entre cette dernière et la gaine rigide.

Les éléments de suspension consistent en deux bourrelets périphériques annulaires (51) et (52), en mousse de polyéthylène, collés dans des logements appropriés de la gaine (4), en haut et en bas de cette dernière.

Selon la figure 4, le récipient thermo-isolant a la même structure que précédemment, sauf qu'il comporte côte-à-côte, dans une même gaine (4) avec un bourrelet périphérique inférieur (152) et un bourrelet périphérique (151) d'amortissement :

- deux ampoules d'isolation (101) et (102) ;

- deux plaques d'amortissement (156) et (157) entourant respectivement les ampoules (101) et (102), séparées par un séparateur (160) ;

- deux collerettes (541) et (542) et deux bouchons (801) et (802).

Ce récipient thermo-isolant permet de stocker côte à côte par exemple un liquide chaud et un liquide froid.

0192581

Revendications

1. Récipient thermo-isolant, du genre comprenant :

- au moins une ampoule d'isolation thermique (1), ayant la forme d'un vase à double paroi, dont le volume interne est sous vide ;

- au moins une gaine rigide (4) de protection de l'ampoule (1), à l'intérieur de laquelle cette dernière est maintenue, comprenant par exemple un corps sur lequel est fixé un fond ouverte à sa partie supérieure ;

- un bouchon amovible (8, 801) disposé au niveau de l'ouverture de la gaine autorisant l'accès à l'intérieur de l'ampoule ;

- une structure périphérique (2, 104) d'amortissement des chocs latéraux vis-à-vis de l'ampoule, élastiquement compressible, distribuée régulièrement à l'extérieur et autour de la gaine, suspendant cette dernière radialement,

caractérisé en ce que la structure d'amortissement comprend des éléments d'amortissement (3, 51, 52, 151, 152) distribués de manière discontinue sur la face externe et latérale de la gaine (4), et qui déterminent entre eux des zones libres de tout matériau élastiquement compressible.

2. Récipient selon la revendication 1, caractérisé en ce que les éléments de suspension sont orientés normalement ou perpendiculairement par rapport à l'axe du récipient.

3. Récipient selon la revendication 1, caractérisé en ce que les éléments de suspension sont orientés parallèlement à l'axe du récipient.

4. Récipient selon la revendication 3, caractérisé en ce que

**0192581**

Les éléments de suspension consistent en des saillies alternées (3), s'étendant substantiellement selon la hauteur de ladite gaine (4).

5. Récipient selon la revendication 4, caractérisé en ce que chaque saillie est une moulure longitudinale (3) de forme arrondie.

6. Récipient selon la revendication 1, caractérisé en ce qu'une plaque (2) d'amortissement est disposée entre l'ampoule d'isolation thermique (1) et la face interne de la gaine.

7. Récipient selon la revendication 6, caractérisé en ce que la plaque d'amortissement forme également structure de suspension, et à cette fin, d'une part cette dernière comporte des parties émergentes, et d'autre part des découpes sont prévues dans la gaine (4) pour le passage des parties émergentes de la plaque.

8. Récipient selon les revendications 3 et 7, caractérisé en ce que la plaque (2) a une surface développée rectangulaire, et la gaine (4) comporte une pluralité de découpes (4b), s'étendant substantiellement selon la hauteur de ladite gaine (4), au travers desquelles émergent les saillies (3) de la structure de suspension.

0192581

*Fig.1*

Fig. 2

0192581

*Fig. 3*

0192581

Fig. 4

# 0192581

## RAPPORT DE RECHERCHE EUROPEENNE

Numéro de la demande

EP 86 42 0008

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-2 103 679 (KLINE et al.) <br> * Page 2, colonne de gauche, lignes 3-14; figure 2 * | 1,2,6 | A 47 J 41/02 |
| | --- | | |
| A | CH-A- 173 027 (LÜDI) <br> * En entier * | 1 | |
| | --- | | |
| D,A | DE-C- 834 507 (ALEXANDERSEN) <br> * En entier * | 1 | |
| | --- | | |
| A | FR-A- 750 020 (FAGES) <br> * En entier * | 1 | |
| | --- | | |
| A | FR-A- 489 850 (DIEM) <br> * En entier * | 1 | |
| | --- | | |
| A | US-A-1 690 509 (THORESON) <br> * En entier * | 1 | |
| | --- | | |
| A | US-A-1 610 136 (KELTY) <br> * En entier * | 1 | |
| | --- | | |
| A | US-A-2 706 571 (RYAN) <br> * En entier * | 1 | |
| | ----- | | |

**DOMAINES TECHNIQUES RECHERCHES (Int. Cl.4)**

A 47 J
B 65 D
A 61 J

Le présent rapport de recherche a été établi pour toutes les revendications

| Lieu de la recherche <br> LA HAYE | Date d'achevement de la recherche <br> 18-04-1986 | Examinateur <br> SCHARTZ J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82